**Europäisches Patentamt**

**European Patent Office**

**Office européen des brevets**

(19)

(11) Publication number: **0 399 749 B1**

(12) **EUROPEAN PATENT SPECIFICATION**

(45) Date of publication of patent specification: **23.08.95**  (51) Int. Cl.6: **C09C 3/10**, C09D 5/00, C09D 17/00

(21) Application number: **90305465.8**

(22) Date of filing: **21.05.90**

The file contains technical information submitted after the application was filed and not included in this specification

(54) **Colorant-dispersed paste, and paint containing the same.**

(30) Priority: **22.05.89 JP 128240/89**

(43) Date of publication of application:
**28.11.90 Bulletin 90/48**

(45) Publication of the grant of the patent:
**23.08.95 Bulletin 95/34**

(84) Designated Contracting States:
**DE GB**

(56) References cited:
**DE-A- 3 321 905**
**US-A- 4 478 643**

(73) Proprietor: **NIPPON PAINT CO., LTD.**
**2-1-2, Oyodokita**
**Kita-ku**
**Osaka-shi**
**Osaka 530 (JP)**

(72) Inventor: **Kobayashi, Toshikatsu**
**895, Fukakusa-kitahasuike-cho,**
**Fushimi-ku**
**Kyoto-shi,**
**Kyoto (JP)**
Inventor: **Kouguchi, Kenji**
**4-25-1, Kishibekita,**
**Suita-shi**
**Osaka (JP)**
Inventor: **Kageyama, Hiroyuki**
**4-25-1, Kishibekita,**
**Suita-shi**
**Osaka (JP)**

(74) Representative: **Pacitti, Pierpaolo A.M.E. et al**
**Murgitroyd and Company**
**373 Scotland Street**
**Glasgow G5 8OA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**EP 0 399 749 B1**

**Description**

BACKGROUND OF THE INVENTION

The present invention relates to inorganic colorant-dispersed pastes, and paints containing the same; in more detail, it relates to pastes in which the colorants are dispersed beforehand in the production of paints etc., and paints being produced from the inorganic colorants and the paste in which the colorants are dispersed.

As paint, there are so-called oil paints which contains an organic, solvent, a water paint wherein water is used instead of the organic solvent, and a powder paint in which the solvent is not used. Since oil paint involves use of an organic solvent which is harmful and volatile, a problem of pollution occurence such as air pollution and health injury for coating workers is present, so water paint and powder paint are under development.

In formulating a paint, powdered colorants are ground in a vehicle of a dispersion medium, which comprises suitable resins, solvents and so on, to produce a so-called paste in which colorants are uniformly dispersed, and then resins, solvents, and various kinds of additives are further added to the paste, if necessary.

As the colorants which have been used as the raw materials for paints etc., there are organic and inorganic colorants. While the organic colorants are superior in color clearness, the inorganic colorants show high stability and are superior in heat-resistance, hiding power, and weather-resistance, so that the inorganic colorants are more often used for an use in which durability is necessary.

From a standpoint of efficiency for production, a paste which contains a colorant in high concentration is at first prepared by using various types of dispersing tools, and this paste is diluted with a solution of a resin, which is defined depending upon their respective use, to get a paint. In this process, it is very important to disperse the colorant particles in a fine, stable condition and, for this, the colorant particles must be of good affinity with the resin molecule composing the paste and also, it is important that the adsorbed resin prevents flocculation of the dispersed colorant particles ( to stabilize the colorant-dispersion ) by formation of an adsorbed resin layer on the colorant particle surface. Furthermore, paints and paint films have to posses some kinds of performance such as gloss, hiding power, stabilities against settling, flooding, and floating and so on. In order to enhance these kinds of performance, fine dispersion of the colorant is necessary. Dispersibility of the colorant in the paint is better as an affinity between the colorant and the vehicle becomes better, and the affinity between the colorant and vehicle is affected with surface properties of the colorant.

DE-A-3321905 discloses an inorganic powder with improved dispersibility, single particles of the powder being coated with a thin film of organic polymer by plasma polymerisation. The inorganic powder may be a magnetic powder.

The vehicle in which the colorant is dispersed is usually composed of resins as the forementioned. When the resin molecule has an acidic functional group such as a carboxyl group and a sulphonic group or a basic functional group such as a primary, secondary, or tertially amino group and an imino group, the resin molecule adsorbs the colorant by an acid-base interaction improving the dispersion stability, when a basic functional group or an acidic functional group is suitably introduced into the colorant. In this connection, among the methods which improve the affinity between the colorants and the resins, an art wherein amphoteric resins are used to enhance the acid-base integration between resins and colorants has been opened in US Patent 4632961 (Japanese Official Patent Provisional Publication, showa 58-21468), and an art wherein acidity and/or basicity is given to colorants by plasma-treating to enhance the acid-base interaction between resins and colorants, has been opened in US Patent 4478643 (Japanese Official Patent Provisional Publication, showa 58-217559 ).

However, in the series of water-soluble resin paints, fluorine resin paints, and epoxy resin paints, since the acidic or basic functional group has been consumed when the resin is dissolved into a solvent ( water ) or since introduction of the acidic or basic functional group into the resin is impossible due to a synthetic reason of the resin or with controlling a crosslinking reaction of the resin, it is generally difficult to utilize the acid-base interaction for the adsorption of the resin to colorant. For the purpose, the SP ( solubility parameter ) concept reported by C. M. Hansen [ C. M. Hansen; J. Paint Tech., 39, No. 505, 104 ( 1967 ) ], has been proved as a very useful tool to give affinity between the colorants and resins. According to this concept, two materials which posses similar SP values mix well.

In those series of paints, adsorption of the resin to the colorant is attained by that the free energy on the interface between the colorant and the resin is arranged to be smaller than the free energy on the interface between the colorant and the solvent, but since the molecule skeleton of the fluorine resin and

2

epoxy resin is of low polarity, when attention is paid to the polarity of the colorant surface, the organic colorant and carbon black have low polarity on their surfaces, so tha the free energy on the interface between the colorant and the resin is small and the resin adsorption proceeds easily.

However, most inorganic colorants are composed of metal oxides such as $TiO_2$, $ZnO$, $SiO_2$, $Al_2O_3$, $Fe_2O$, $FeO$, and $Fe_2O_3$ and of metals such as Al, Cu, and Zn. On the surface of colorants, a number of hydroxy groups are formed by chemical or physical adsorption of water existing in the air. Because of this, the surface of inorganic colorants has high polarity and, for example, when the polarity is indicated by the heat of immersion, the organic colorants such as phthalocyanine blue and quinacridone red and carbon black show about 0.1 $J/m^2$ or less, whereas the inorganic colorants show 0.25 $J/m^2$ or more. Thus, the inorganic colorant surface has high polarity, so that the free energy on the interface between the colorant and the resin is large, relatively unstable interface is resulted, and the resin adsorption does not proceed. Therefore, in order to increase the SP type of affinity between an inorganic colorant having such an inherently polar surface as above, and a resin which has relatively lower polarity, the polarlity of the surface of the inorganic colorant must be lowered. That is, in order to carry out dispersion stability with the resin adsorption of an inorganic colorant, it is indeed necessary to lower the surface polarity of the inorganic colorant. Also, in the series of water-soluble resin paint, since the dispersion stability is mainly attained with the resin adsorption resulting from an hydrophobic interaction between the resin and the colorant ( T. Kobayashi, T. Terada, and S. Ikeda, J. Japan Society of Colour Material, 62, 524 ( 1989 )), the colorant surface has to be hydrophobic ( low polarity ) and thus, it is necessary to decrease polarity of the inorganic colorant surface.

Regarding modification for the colorant surface, the following methods have recently been proposed: as a wet method, ( 1 ) a method of treating with a silane coupling agent, ( 2 ) a method of treating with an aliphatic alcohol and a fatty acid etc. at elevated temperature and, as a dry method, ( 3 ) a method of vapor phase fluorination using high temperature flow reactor [ opened in the Bulletin of the Chemical Society of Japan, 60, 2833 ( 1987 ) ] , ( 4 ) a method wherein a cyclic silicone compound is polymerized on the surface of a colorant [ opened in the proceedings of the Annual Meeting of the Japan Society of Colour Material, 1986, 1B- 10 ) and so on.

In the said hitherto known methods for treating the surface of colorants, the method ( 1 ) has difficulty in selection of the treating conditions and a defect of high cost in treatment. The method ( 2 ) has a case that the treatment is not possible in dependence upon chemical properties of surfaces of colorants. For example, the use of an aliphatic alcohol is limited to the case where the surfaces of colorants are neutral or weakly acidic. In addition, if such treated colorants are used under aqueous conditions, a treated layer is removed from the surface of the colorants by hydrolysis and, therefore, a water paint can not be applied.

The method ( 3 ) needs to use such a high temperature as 700 ~ 800 °C for reaction and, therefore, there is a defect that a hue changes due to the high temperature, and as for the method ( 4 ), applicable colorants and vehicles cannot be freely chosen because a special silicone compound is used.

## SUMMARY OF THE INVENTION

Thus, the subject of the present invention is to provide an excellent performance of paints by using a titanium dioxide inorganic colorant whose dispersibility in the dispersing medium is enhanced; the range of vehicle and paint systems to which said colorant can be applied is wide; especially suitable for water paint in which a neutral or a non-polar resin is used. Also, the subject of the present invention is to provide a paste and paint, where said inorganic colorant is used. In the invention to solve said subject, low-temperature plasma polymerization of an organic compound is applied for forming a non-polar group on a surface of the inorganic colorant.

According to the present invention there is provided an aqueous dispersed paste wherein an inorganic colorant is dispersed in an aqueous solution in which a water-soluble resin is dissolved in water, characterised in that the inorganic colorant is titanium dioxide which has on its surface a non-polar group formed by a low-temperature plasma polymerisation reaction of an organic compound and has decreased polarity so that the surface of the inorganic colorant does not become non-polar.

The present invention also provides an aqueous paint comprising the paste as defined in the previous paragraph, having more water and at least one of said water-soluble resin and an additional water-soluble resin.

The present invention also provides an aqueous paint wherein an inorganic colorant is dispersed in an aqueous solution in which a water-soluble resin is dissolved in water, characterised in that the inorganic colorant is titanium dioxide which has on its surface a non-polar group formed by a low-temperature plasma polymerisation reaction of an organic compound and has decreased polarity so that the surface of the inorganic colorant does not become non-polar.

It has generally been known that such organic compounds as aromatic hydrocarbons and alicyclic compounds are capable of forming the plasma polymers composed of such hydrocarbons of low polarity as an alkyl and alkylene groups through a plasma state and also known that, if a flourine-containing compound is used as said organic compound, a plasma polymer of further lower polarity containing the flourine is obtained (J. Polymer Science, Polym. Chem. Edit., 15, 2411 (1977).

The plasma polymer is formed on an inorganic colorant surface by bringing the inorganic colorant in contact with a plasma atmosphere of the above organic compound and, as a result, the inorganic colorant is wholly or partly covered with coating film of said plasma polymer and the polarity of the inorganic colorant surface lowers. According to the inventors' experiments, the heat of immersion against water decreases with treating titanium dioxide by styrene plasma, from 0.28 $J/m^2$ to 0.19 $J/m^2$ and, with treating it by octafluorocyclobutane (perfluorocyclobutane), to 0.13 $J/m^2$ (T Kobayashi, H Kageyama, and S Ikeda; ACS Symposium on Plasma Polymerization and Plasma Interaction with Polymeric Materials, Proceedings, 1990 ).

The inorganic colorant in the present invention is titanium dioxide.

The surface of this inorganic colorant has inherent polarity.

The organic compound in the present invention can be for example an aromatic hydrocarbon such as benzene, toluene, xylene, and styrene etc., a cycloaliphatic compound such as cyclohexane, cyclobutane, and THF ( tetrahydrofuran ) etc., a compound which contains an element other than hydrogen and carbon in said compounds, for example, a fluorine-containing compound such as octafluorocyclobutane, and an organic compound which is capable of forming a non-polar group on a surface of the inorganic colorant by plasma polymerization.

As a method to form a non-polar group on a surface of the inorganic colorant, plasma polymerization of said organic compound is applied. Thus, when the low temperature plasma of said organic compound is brought into contact with the colorant in powdered form, the non-polar group is formed on a surface of the inorganic colorant. The surface of the inorganic colorant is treated so as to increase the non-polar group than the surface before treatment and to decrease the polarity.

The low temperature plasma treatment is carried out using an apparatus and a method which are usually applied for various kinds of materials, but it is preferred to select an organic compound whose vapor pressure is 0.1 torr or more at room temperature. In addition, it is preferred to carry out under a condition of that the pressure of plasma atmosphere of an organic compound is 0.1~ 10 torr, and it is more preferable to carry out in a range of 0.5~ 3 torr. It is preferred to carry out under a condition whereby the electric energy being imposed during the plasma treatment is 1 $mWh/m^2$ or more per an unit surface area of the inorganic colorant being subjected to treatment.

The inorganic colorant produced as above is dispersed in a suitable vehicle by a usual means and is used to prepare a paste for producing a paint and to produce a paint.

As a material for a dispersing medium for dispersing the inorganic colorant relating to the present invention, for example, as a vehicle for paint and so on, it is preferred to use various kinds of water-soluble materials such as a water-soluble acrylic resin etc. and various kinds of non-polar materials such as a fluorine resin etc.

The colorant-dispersed paste may be obtained by dispersing the treated inorganic colorant into a vehicle.

The vehicle comprises a resin and water and, if necessary, an additive such as one which is known for use in paint. As a resin for this vehicle, a water-soluble resin is used. The method and apparatus for dispersing the inorganic colorant in the vehicle can be similar to those used in producing conventional paint.

The paints of this invention contain the treated inorganic colorant and the paste in which the colorant is dispersed.

The paint is usually produced by further adding one or more of a plasticizer, a drying agent, a curing agent, a dispersing agent, and an emulsifier etc. into a paste in which colorants are dispersed. Known raw materials and processes for introducing them may be used.

Besides, the inorganic colorant may directly be added without using the paste in which the colorant is dispersed. As a paint being produced using an inorganic colorant relating to the present invention, as described above, a water paint which uses a water-soluble resin and a neutral or non-polar resin paint are preferred.

For the inorganic colorant of the present invention which has inherent polarity on a surface, if a non-polar group is formed on the surface with low temperature plasma polymerization of an organic compound, polarity of the surface of the inorganic colorant lowers.

4

When the inorganic colorant surface lowers in polarity, the affinity of the surface for the non-polar vehicle of paints etc. is enhanced, and the dispersibity of the inorganic colorants is improved.

In particular, in a dispersion medium composed of a water-soluble resin and water, the resin is adsorbed on the colorant surface through so-called hydrophobic interaction between hydrophobic groups of the resin and non-polar groups of the colorant, and dispersibility and dispersion stability of the inorganic colorant is improved because the adsorbed resin prevents flocculation of dispersed colorants and keeps the colorant in a separated state.

BRIEF DESCRIPTION OF THE DRAWING

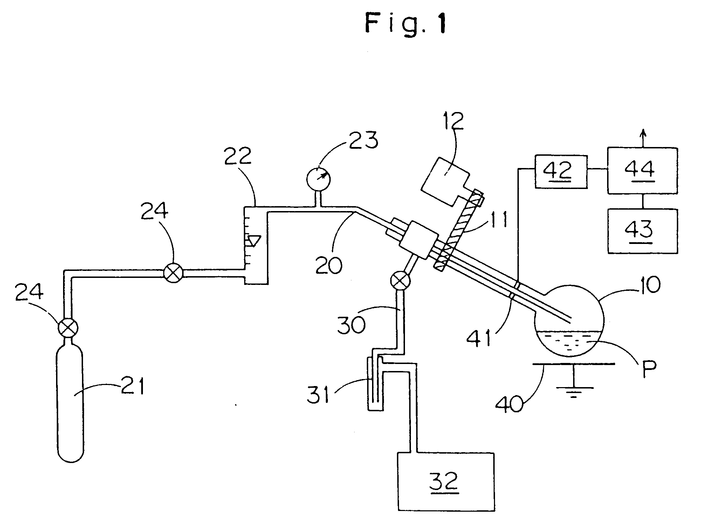

Fig. 1 shows an outline structure of a plasma-treatment apparatus for producing an inorganic colorant.

DESCRIPTION OF THE INVENTION

The treatment vessel of a flask shape 10 has a volume of 500 ml and is connected at a neck part with a driving motor 12 via a belt for driving 11, and is designed so as to accomodate a material P such as an inorganic powdered colorant etc. and to carry out the plasma treatment with rotating and stirring. The treatment vessel 10 is connected with a gas-supplying pipe 20, with which a gas cylinder 21 as resources for an organic compound is set at the other end of the pipe 20. On the way of the pipe 20, a gas flow meter 22 and a pressure gauge 23 or a valve 24 are set. With the treatment vessel 10, a vacuum-suction pipe 30 is also connected, which is connected with a vacuum pump 32 via a trap 31 and thus, a gas in the treatment vessel 10 is degased with suction. On the way of the neck part and below the bottom part of the treatment vessel 10, a pair of electrodes 40 and 41 are disposed, one electrode 40 is grounded and the other electrode 41 is connected with a high frequency electric source 44 via a impedance matching circuit 42. For the high frequency electric source 44, a high-frequency generator 43 is set as well as connected wlth a commercial electric source.

By using a treatment apparatus as described above, the low temperature plasma treatment for an inorganic colorant is carried out.

- Example 1 -

In the treatment vessel 10 of said treatment apparatus were placed 50 g of titanium dioxide [ Tipaque ( registrated trademark ) CR -50 made by Ishihara Sangyo Co., Ltd. ] and 50 g of a glass bead GB 503M made by Toshiba Barotini Co., Ltd. ) and, after degassing treatment until $10^{-1}$ torr, a styrene vapour was introduced into the treatment vessel 10 as a reacting gas of an organic compound and the pressure was adjusted at 1 torr. A high frequency of 13.56 MHz was imposed between the electrodes 40 and 41, wherby a low temperature plasma was generated. An inorganic colorant A which has a non-polar group on a surface was obtained by treating for 30 minutes with a 50 W-imposing electric power.

In the above process, similar treatment was carried out with replacing the reacting gas with toluene, cyclohexane, and THF to obtain the inorganic colorants B~ D. Also, the procedure for producing the inorganic colorant A was repeated except that the treating time was 30 seconds, whereby the inorganic colorant E was obtained.

Each of the inorganic colorant A ~ E as mentioned above and an inorganic colorant not yet treated were dispersed, by using a water-soluble acrylic resin ( which was an acrylic resin having an acid value 60 and a number-averaged molecular weight 6000, solubilized by neutralizing the resin with dimethylethanolamine ) as a vehicle, with a 200 ml desk top type of SG mill, according to the formulation which is shown in the under-presented Table 1, whereby the aqueous colorants-dispersed paste a ~ e and x were obtained.

Properties of the thus-obtained paste a ~ e and x, in which colorants were dispersed, were determined as described below and the results are shown in Table 1.

First, the colorants-dispersed paste a ~ e and x were applied on a glass plate by using a doctor blade and, after drying, specular gloss at 60 ° was evaluated. Besides, using a viscosimeter of a corn-plate type ( E type made by Tokyo Keiki Co., Ltd. ) and changing a shear rate in a range of 1.92~ 384 $sec^{-1}$, viscosity determination was carried out and the yield value was obtained from the Casson's equation.

Table 1

| Component combined | | Colorant-dispersed paste a | Colorant-dispersed paste b | Colorant-dispersed paste c | Colorant-dispersed paste d | Colorant-dispersed paste e | Colorant-dispersed paste x |
|---|---|---|---|---|---|---|---|
| | Water-soluble resin | 6.5 | 6.5 | 6.5 | 6.5 | 6.5 | 6.5 |
| | Deionized water | 48.5 | 48.5 | 48.5 | 48.5 | 48.5 | 48.5 |
| | Inorganic colorant | Colorant A: 45 | Colorant B: 45 | Colorant C: 45 | Colorant D: 45 | Colorant E: 45 | Colorant not yet treated: 45 |
| | Condition for plasma treatment | Styrene / 50 W 30 min. | Toluene / 50 W 30 min. | Cyclohexane / 50 W 30 min. | THF / 50 W 30 min. | Styrene / 50 W 30 sec. | — / — |
| Gloss ( 60° ) | | 80 | 82 | 80 | 77 | 53 | 50 |
| Yield value ( dyne/cm ) | | 3 | 2 | 4 | 5 | 20 | 23 |

In Table, the numerical value of component combined shows a part by weight.

As seen in the above results, the paste a ~ d, in which colorants were dispersed, relating to the examples of the present invention, when compared with the paste x in which a colorant not yet treated was dispersed, all have higher gloss and smaller yield value, which means better flow properties, and an effect of this invention was evidenced. Besides, when compared with the dispersed paste a ~ d, the treating effect in the dispersed paste e was poor, for which the inorganic colorant E being short in treating time was used. From these facts, it is preferred that imposing electric energy is 1 mWh/m$^2$ or more.

- Example 2 -

The paste b and x obtained from said example 1, in which colorants were dispersed, were dissolved according to the formulation in the under-presented Table 2 by using as vehicles the water-soluble acrylic resin which are the same as in the example 1 and water-soluble melamine resin [ Cymel-303 ( registered trademark ) made by Mitsui Toatsu Co., Ltd. ] , whereby the water paints b′ and x′ were obtained.

These paints b′ and x′ were applied on a tinplate by using a doctor blade, stood for 30 minutes, and then baked at 150°C for 20 minutes to get a paint film. The paints, which were stocked at 40°C for 2 weeks after their production, were treated with the same procedure to the above to obtain another paint film. Specular gloss at 20 °C of each film was measured. Results obtained are shown in Table 2.

Next, by using the water-soluble acrylic resin used in the example 1, a carbon black ( MA-100, made by Mitsubishi Chemical Co., Ltd. ) and a water-soluble melamine resin [Cymel-303 ( registered trademark ) made by Mitsui Toatsu Co., Ltd.] , a paint of black color was produced and mixed with said paints b′ and x′ that are white paints. The mixing proportion was set as 1 to 180 in the weight ratio between the carbon black in the black paint and the titanium dioxide in the paints b′ and x′.

These mixed paints were applied on a tinplate by a doctor blade and stood for 30 minutes, and a part of the coating film was rubbed with a finger ( a rubbing test ) and baked at 150 °C for 20 minutes.

For the thus-obtained, cured paint film, a color difference between the rubbed surface and the un-rubbed surface (ΔE ) was determined with a color and color difference meter ( SM-4 type made by Suga Shikenki ). Results obtained are shown in Table 2.

Table 2

| Sample examined | | Paint b' | Paint x' |
|---|---|---|---|
| Paint formulation | Water-soluble acrylic resin | 40 | 40 |
| | Water-soluble melamine | 22 | 22 |
| | Deionized water | 68 | 68 |
| | Dispersed paste b | 100 | — |
| | Dispersed paste x | — | 100 |
| Gloss ( just after production ) | | 80 | 71 |
| Gloss ( after storage ) | | 80 | 63 |
| Color difference ( ΔE ) | | 0.14 | 0.65 |
| In Table, the paint formulation is shown by a part by weight. | | | |

As seen in the above results, when compared with the paint x' which contains the inorganic colorant B not yet treated, the paint b' in the example of this invention shows higher gloss and, even after the storage, a decrease in gloss is not observed, so that superiority in storage stability is proved. Also, as a result of the rubbing test for the mixed paint, it was proved that the paint, for which the inorganic colorant relating to the example of this invention was used, was obviously small in the color difference and superior in the stability against flooding.

According to the present invention, the surface of the titanium dioxide colorant can be transformed so that its polarity can be much reduced by that a nonpolar group obtainable from low temperature plasma polymerization of an organic compound is formed, and in a case of that a nonpolar material is used as a dispersion medium of a colorant such as a vehicle for coating and so on, an affinity of a dispersion medium for a colorant material becomes higher and a dispersibility is elevated. Also, since stabilization due to a hydrophobic interaction is more easily attained, the dispersibility for a water-soluble material is elevated. As a result, in various kinds of use in which very good dispersibility of the inorganic colorant into a dispersion medium is required, various kinds of performance being affected with the dispersibility are elevated. For example, as paste or as paint wherein an inorganic colorant is dispersed, various kinds of performance such as gloss, storage stability, and stability against flooding and floating are elevated.

In particular, the performance of a water paint and a neutral or a nonpolar resin, which have hitherto been inferior in performance because of the bad dispersibility of an inorganic colorant, can be greatly elevated, so that great contribution for use of these paints and for expansion of their demand can be expected.

As treatment for elevating the dispersibility of the titanium dioxide colorant, since a method of relatively simple operation and high treating efficiency such as the low temperature plasma polymerization of an organic compound is adopted, the producing efficiency for a product is high and the producing cost is cheap.

**Claims**

1. An aqueous dispersed paste wherein an inorganic colorant is dispersed in an aqueous solution in which a water-soluble resin is dissolved in water, characterised in that the inorganic colorant is titanium dioxide which has on its surface a non-polar group formed by a low-temperature plasma polymerization reaction of an organic compound under a condition that the electric energy applied during the plasma polymerization reaction is 1 mWh/m$^2$ or more per unit surface area of inorganic colorant and after the plasma polymerization reaction the surface of the inorganic colorant does not become non-polar.

2. An aqueous paint comprising the paste of Claim 1, having more water and at least one of said water-soluble resin and an additional water-soluble resin.

3. An aqueous paint wherein an inorganic colorant is dispersed in an aqueous solution in which a water-soluble resin is dissolved in water, characterised in that the inorganic colorant is titanium dioxide which has on its surface a non-polar group formed by a low-temperature plasma polymerization reaction of an organic compound under a condition that the electric energy applied during the plasma polymerization reaction is 1 mWh/m$^2$ or more per unit surface area of inorganic colorant and after the plasma polymerization reaction the surface of the inorganic colorant does not become non-polar.

**Patentansprüche**

1. Wässrige dispergierte Paste, bei welcher ein anorganischer Farbstoff in einer wässrigen Lösung, in welcher ein wasserlösliches Harz gelöst ist, dispergiert ist, dadurch gekennzeichnet, daß der anorganische Farbstoff Titandioxid ist, welches an seiner Oberfläche eine nichtpolare Gruppe hat, die durch eine Plasmapolymerisationsreaktion bei niedriger Temperatur einer organischen Verbindung unter einer Bedingung geformt wurde, daß die elektrische Energie, die während der Plasmapolymerisationsreaktion angelegt wird, 1 mWh/m$^2$ oder mehr je Einheitsoberflächenbereich des anorganischen Farbstoffes beträgt, wobei die Oberfläche des anorganischen Farbstoffes nach der Plasmapolymerisationsreaktion nicht nichtpolar wird.

2. Wässrige Farbe, welche die Paste nach Anspruch 1 umfaßt, sowie mehr Wasser und wenigstens eines von dem wasserlöslichen Harz und dem zusätzlichen wasserlöslichen Harz enthält.

3. Wässrige Farbe, bei welcher ein anorganischer Farbstoff in einer wässrigen Lösung, in welcher ein wasserlösliches Harz in Wasser gelöst ist, dispergiert ist, dadurch gekennzeichnet, daß der anorganische Farbstoff Titandioxid ist, welches an seiner Oberfläche eine nichtpolare Gruppe hat, die durch eine Plasmapolymerisationsreaktion bei niedriger Temperatur einer organischen Verbindung unter einer Bedingunge geformt ist, daß die elektrische Energie, die während der Plasmapolymerisationsreaktion angelegt wird, 1 mWh/m$^2$ oder mehr je Einheitsoberflächenbereich des anorganischen Farbstoffes beträgt, wobei die Oberfläche des anorganischen Farbstoffes nach der Plasmapolymerisationsreaktion nicht nichtpolar wird.

**Revendications**

1. Pâte aqueuse dispersée dans laquelle un colorant inorganique est dispersé dans une solution aqueuse, dans laquelle une résine soluble dans l'eau est dissoute dans de l'eau, caractérisée :
   - en ce que le colorant inorganique est du dioxyde de titane, dont la surface présente des groupements non-polaires formés par une réaction de polymérisation en plasma à basse température d'un composé organique dans des conditions telles que l'énergie électrique appliquée durant la réaction de polymérisation en plasma est de 1 mWh/m2 ou plus par unité de surface du colorant inorganique,

- et en ce que, après la réaction de polymérisation en plasma, la surface du colorant inorganique ne devient pas non-polaire.

2. Peinture aqueuse comprenant la pâte de la revendication 1, ayant plus d'eau et au moins une desdites résines solubles dans l'eau et une résine additionnelle soluble dans l'eau.

3. Peinture aqueuse dans laquelle un colorant inorganique est dispersé dans une solution aqueuse, comprenant une résine soluble dans l'eau dissoute dans de l'eau, caractérisée en ce que le colorant inorganique est du dioxyde de titane, dont la surface comporte des groupements non-polaires formés par une réaction de polymérisation en plasma à basse température d'un composé organique dans des conditions telles que l'énergie électrique appliquée durant le réaction de polymérisation en plasma est de 1 mWh/m2 ou plus par unité de surface du colorant inorganique et en ce que, après la réaction de polymérisation en plasma, la surface du colorant inorganique ne devient pas non-polaire.

# Fig.1

EP 0 399 749 B1